(19)

**Europäisches Patentamt**
**European Patent Office**
**Office européen des brevets**

(11) **EP 4 311 816 A1**

(12) **EUROPEAN PATENT APPLICATION**

(43) Date of publication:
**31.01.2024 Bulletin 2024/05**

(21) Application number: **22306129.2**

(22) Date of filing: **28.07.2022**

(51) International Patent Classification (IPC):
**C04B 28/08** [(2006.01)]

(52) Cooperative Patent Classification (CPC):
(C-Sets available)
**C04B 28/08;** C04B 2111/00689        (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **Ecocem Materials Limited**
**Dublin 3 D03E0C0 (IE)**
• **Institut National des Sciences Appliquées**
**de Toulouse**
**31077 Toulouse Cedex 4 (FR)**

• **Université Paul Sabatier Toulouse III**
**31400 Toulouse (FR)**

(72) Inventors:
• **GAO, Xiaoxiao**
**31077 TOULOUSE CEDEX 4 (FR)**
• **ALFANI, Roberta**
**75012 PARIS (FR)**
• **FROUIN, Laurent**
**75012 PARIS (FR)**
• **CYR, Martin**
**31077 TOULOUSE CEDEX 4 (FR)**

(74) Representative: **Plasseraud IP**
**66, rue de la Chaussée d'Antin**
**75440 Paris Cedex 09 (FR)**

(54) **TILE ADHESIVE BASED ON GROUND GRANULATED BLAST FURNACE SLAG (GGBFS)**

(57)     The invention concerns a hydraulic binder composition comprises:
• Ground Granulated Blast Furnace Slag (GGBS),
• More than 5wt% and, preferably at most 30wt% of calcium sulfate,
• 5wt% or less of Ordinary Portland Cement (OPC),
• 10wt% or less of ye'elimite containing cements, ye'elimite containing clinker, calcium aluminate cement (CAC), or mixtures thereof,

• at least one complexing and thickening polymer, selected from the group consisting of Cellulose Methyl Carboxylate (CMC), Gum Arabic (GA), Guar, Guar ether, Agar, Carrageenan, Alginate, Xanthan Gum, Chitosan, Pectin, Hyaluronic Acid, Locust Bean Gum, superabsorbent polymer (SAP), preferably from the group consisting of CMC and GA, and
• at least one rheological modifier like cellulose ether different from the complexing and thickening polymer.

EP 4 311 816 A1

(52) Cooperative Patent Classification (CPC): (Cont.)

C-Sets
**C04B 28/08, C04B 7/02, C04B 7/32, C04B 7/323,
C04B 14/06, C04B 22/143, C04B 24/38,
C04B 24/383, C04B 24/383, C04B 40/0042**

**Description**

This disclosure pertains to the field of hydraulic binder compositions comprising Ground Granulated Blast Furnace Slag (GGBS or slag) for preparing industrial mortars. In particular, the technical field of the invention relates to hydraulic mineral binders including Ground Granulated Blast Furnace Slag, which are used in compositions able to set and harden, such as mortar compositions.

The invention also concerns the methods of preparation of these hydraulic binder compositions and of these mortars compositions able to set and harden.

**Background Art**

Portland cement production has a strong and negative impact on the environment due to the emissions of large quantities of carbon dioxide. The production of cement inherently generates $CO_2$ during the calcination of the raw materials at very high temperature (1450°C) in a kiln through decarbonation of the limestone (Eq. (1)):

$$CaCO_3 \text{ (s)} \rightarrow CaO \text{ (s)} + CO_2 \text{ (g)} \quad \text{(Eq. (1))}$$

In addition, carbon dioxide is released as a result of the combustion of the fossil fuels needed to heat the cement kiln. By adding the additional emissions of grinding, almost one ton of $CO_2$ per ton of Portland cement is obtained. Overall, the cement industry is responsible for about 7 to 9% of the global carbon dioxide emissions.

Moreover, handling Portland cement may lead to health issues (such as allergy) due, in particular, to its high alkalinity (pH higher than 13). In addition, hazardous elements as hexavalent Chromium (Cr (VI)) may be released upon kneading, which is also unhealthy for the workers when it gets in contact with the skin. Although Cr (VI) reducing agents (as ferrous sulfate) are normally included in the cement powder, their efficiency is limited in time. Building workers, in particular those in the third world, are not expected to often check the deadline related to such treatments.

Most current research on new binders aims to replace cement in various applications by binders with lower environmental impact. One route is through using resources without their expensive treatment, such as by-products from other industries (waste for one industry, but primary resource for others). This is the case of blast-furnace slag which is a by-product of iron industry. By grinding this product into fine powder (GGBS) one can obtain a cementitious material that can be used in partial substitution of cement or used alone by adding some chemical activators.

It is important to note that the use of a GGBS is not only environmentally-friendly but also leads to several enhanced properties when it's used to formulate mortars, such as high resistance to sulfate attack, low permeability, good resistance in a chemically aggressive environment, low heat of hydration (required in massive structures), excellent durability in general, possibility of immobilization of heavy metals or radionuclides, etc.

However, contrary to Portland cement the GGBS based cement needs an alkaline activator for forming hardened mortars. Unfortunately, these alkaline activators are irritating for the user. Some effort has been made for limiting the amount of alkaline activator needed. For instance, patent US 8,932,402 B2 discloses a hydraulic binder composition wherein the alkaline activator (the base) is in an amount of 1 wt% or less. Despite the benefice of this decrease amount of alkaline activator, the mechanical properties of the resulting mortar could be improved.

Generally, calcium sulfate is used to accelerate the hardening of GGBS-based cements. However, super sulfated cements having a high content of GGBS and more than 5wt% of calcium sulfates undergo a rapid carbonation in presence of carbon dioxide even at atmospheric concentration what leads to a flexural strength decrease.

Organic polymers, like cellulose ethers, latex, retardant agents, water-reducing agents and anti-shrinkage agents, are generally used for modifying the rheology state of mortars and improving the mechanical and durability performance in long term.

Some organic polymers, like cellulose ethers and latex are essential components of some industrial mortars, like tile adhesives, repairs, etc. Unfortunately, in GGBS rich-based binder composition with alkali activations/rich-cations activation system most of polymers, like cellulose ethers and latex, are not resistant to alkaline/cation environment and their action is strongly affected.

In this context, the invention aims at addressing at least one of the above problems and/or needs, through fulfilling at least one of the following objectives:

- O1- Providing a GGBS-based binder or a mortar composition including said GGBS-based binder, which is attractive substitute to Ordinary Portland Cement (OPC)-based compositions.

- O2- Providing a slag-based binder or a mortar composition including said GGBS-based binder, which is environmentally friendly.

- O3- Providing a slag-based binder or a mortar composition including said GGBS-based binder, which is more acceptable than OPC-based compositions, with respect to the health and safety issues.

- O4- Providing a slag based binder or a mortar composition including said GGBS-based binder, which gives rise to dry-mortars, wet mortars formulations with appropriate ability to be manufactured by several ways, like vibro-compaction, spraying, trowelling, casting, etc.

- O5- Providing a slag-based binder or a mortar composition including said GGBS-based binder, which gives rise to wet formulations with appropriate rheological properties, i.e stable rheology (good workability) during the usual setting time (e.g. from some minutes to several hours) required by the users of said wet formulation.

- O6- Providing a slag-based binder or a mortar composition including said GGBS-based binder, which gives rise to a hardened material with required mechanical properties, especially an acceptable early strength (for instance 24 hours).

- O7- Providing a slag-based binder or a mortar composition including said GGBS-based binder, which gives rise to a hardened material with required durability.

- O8- Providing a slag-based binder or a mortar composition including said GGBS-based binder, which gives rise to a hardened material with the usually required setting time (e.g. from some minutes to several hours).

- O9- Providing a simple and cheap method of preparation of the GGBS-based binder or the mortar composition including said GGBS-based binder, which complies with at least one of the objectives -O1- to -O8-.

- O10- Providing a simple and cheap method of preparation of a wet form of the slag-based binder or a mortar composition including said GGBS-based binder.

- O11- Providing hardened products for the building industry including GGBS as the main component of the hydraulic binder.

**Summary**

The above objectives are reached thanks to a hydraulic binder composition comprising:

• Ground Granulated Blast Furnace Slag (GGBS),

• More than 5wt% and, preferably at most 30wt% of calcium sulfate,

• 5wt% or less of Ordinary Portland Cement (OPC),

• 10wt% or less of ye'elimite containing cements, ye'elimite containing clinker, calcium aluminate cement (CAC), calcium aluminate clinker or mixtures thereof,

• at least one complexing and thickening polymer, selected from the group consisting of Cellulose Methyl Carboxylate (CMC), Gum Arabic (GA), Guar, Guar ether, Agar, Carrageenan, Alginate, Xanthan Gum, Chitosan, Pectin, Hyaluronic Acid, Locust Bean Gum, superabsorbent polymer (SAP), and

• at least one rheological modifier like cellulose ether different from the complexing and thickening polymer.

The invention also concerns dry mortar compositions comprising at least one aggregate and the above-mentioned hydraulic binder composition.
The invention is also directed to wet mortar compositions, preferably tile adhesive compositions, comprising at least one aggregate and the above-mentioned hydraulic binder composition.
The invention further concerns hardened mortar obtained from the wet mortar composition mentioned above.
The invention is in addition directed to a process for preparing the wet mortar composition mentioned above, comprising a step of mixing with water, the hydraulic binder composition mentioned above, the binder composition being prepared before the mixing step or in situ during the mixing step from at least some of the different components of the binder composition taken separately and/or under the form of premix(es).

**Definitions**

According to the terminology of this text, the following non limitative definitions have to be taken into consideration:

"slag" denotes a stony by-product matter separated from metals during the smelting or refining of ore.

"GGBS" or "GGBFS": Ground Granulated Blast Furnace Slag, which is equivalent to blast furnace slag, Granulated Blast Furnace Slag (GBFS), blast furnace water-crushed slag powder and blast furnace slag fine aggregate.

"clinker" and "cement" are understood as meaning a powdery substance made for use in making mortar. They are mineral binders, possibly free from any organic compound.

"binder" refers to "hydraulic binder" meaning any material that hardens just by adding water, like GGBS and cement.

"mortar" refers to a material composed of binder(s), aggregates such as sand and other components, like admixtures.

"$d_{50}$" gives the median size of the granulometric distribution of material's particles (usually in micrometers for cementation materials). It means that 50wt% of the particles have a size less than the specified number and 50wt% of the particles have a size greater than the given number. The measurement of dso is done by Laser diffraction analysis, also known as Laser diffraction spectroscopy, by means of Laser diffraction analyzer such as "Mastersizer 2000" and commercialized by the MALVERN company, with the humid way method.

"water retention agent" is a compound having the property of keeping the water of mixing before the setting. The water is so trapped in the wet formulation paste which improves its bond. To some extent, the water is less absorbed by the support.

"thickening agent" means compounds able to increase the viscosity of a composition.

*The ground Granulated Blast furnace Slag (GGBS)*In some embodiments, the quantity of GGBS is between 55wt% and 95wt%, advantageously between 65wt% and 95wt%, and more advantageously between 75wt% and 95wt%.

In an advantageous embodiment at least a part of the GGBS is superfine GGBS. Superfine GGBS is GGBS particles of which has a dso between 6000 ~ 8500 g/cm$^2$, advantageously between 6500 and 8250 g/cm$^2$, and more advantageously between 7000 and 8000 g/cm$^2$. In this advantageous embodiment, the hydraulic binder composition according to the invention comprises GGBS, wherein between 1wt% and 50 wt% of the GGBS is superfine GGBS, advantageously between 5wt% and 35wt%, and more advantageously between 12wt% and 24wt%.

This proportion of superfine GGBS lead to the improvement of resistance in water immersion of the resulting hardened mortar compared to the mortars according to the invention not including superfine GGBS.

*The calcium sulfate*

The hydraulic binder composition according to the invention comprises more than 5wt% and preferably at most 30wt% of calcium sulfate.

The calcium sulfate may be anhydrite calcium sulfate, hemi-hydrate calcium sulfate, dihydrate calcium sulfate, or mixture thereof. Advantageously, the quantity of calcium sulfate is between 5wt% and 30wt%, advantageously between 5wt% and 25wt%, and more advantageously between 5wt% and 20wt%.

*The Ordinary Portland Cement (OPC)*

According to the invention, the hydraulic binder may comprise 5wt% or less of OPC, advantageously between 0wt% and 2.5wt% or less and more advantageously between 0wt% of 0.5wt% or less.

In the present disclosure, OPC is meant as any OPC according to standard EN 197-1. *The ye'elimite containing cements, ye'elimite containing clinker, calcium aluminate cement (CAC) and calcium aluminate clinker*

Advantageously, in the hydraulic binder composition the total quantity of ye'elimite containing cements, ye'elimite containing clinker and CAC is between 0wt% and 10wt%, advantageously between 0.5wt% and 5wt%, and more advantageously between 2.5wt% and 5wt%.

The presence of ye'elimite containing cements, ye'elimite containing clinker, and/or CAC allows increasing the early strength at 24h of the resulting hardened mortar.

The ye'elimite containing cements may be a sulfoaluminate cement (CSA).

In an advantageous embodiment, the hydraulic binder composition comprises between 10wt% and 80wt% of CSA, advantageously between 30wt% and 70wt% of CSA, and more advantageously between 40wt% and 60wt% of CSA .

The CAC may be chosen in the group comprising monocalcium aluminate (CA) and/or mayenite (C12A7).

*The complexing and thickening polymer*

According to the invention, the hydraulic binder composition comprises at least one complexing and thickening polymer selected from the group consisting of Cellulose Methyl Carboxylate (CMC), Gum Arabic (GA), Guar, Agar, Carrageenan, Alginate, Xanthan Gum, Chitosan, Pectin, Hyaluronic Acid, Locust Bean Gum. In a preferred embodiment, the complexing and thickening polymer is selected from the group comprising CMC and GA.

Advantageously, the quantity of organic complexing and thickening agent is between 0wt% and 1.0wt%, advantageously between 0.1wt% and 0.5wt%, and more advantageously between 0.2wt% and 0.4wt%.

*The rheological modifier*

The hydraulic binder composition according to the invention comprises at least one rheological modifier.

The rheological modifier may be selected from methylcellulose (MC), methylhydroxyethylcellulose (MHEC), Methylhydroxypropylcellulose (MHPC), Hydroxyethylcellulose (HEC) and Hydroxypropylcellulose (HPC).

In an advantageous embodiment, the quantity of rheological modifier is between 0wt% and 1.0wt% , advantageously between 0.1wt% and 0.5wt%, and more advantageously between 0.2wt% and 0.4wt%.

*The dry mortar composition*

The invention also relates to dry mortar compositions, in particular tile adhesive, comprising at least one aggregate and the binder composition described above. The dry mortar composition may eventually contain other admixtures and additions.

According to the invention, "dry" mortar compositions refer to compositions that are in the form of powder and ready to be mixed with water. In other words, the dry mortar composition of the invention may content some moisture, but it essentially contains solid components which are intended to be mixed with water before its application.

Aggregates comprise a large category of particulate material used in construction, including sands, gravels, crushed stones, slag (not-granulated), recycled concrete and geosynthetic aggregates. They serve as reinforcement to add strength to the overall composite material.

Advantageously, said dry mortar composition can also include, apart from aggregates, one or several ingredients, especially functional admixtures, additions and fibres. In particular, these ingredients are chosen among additives selected from the group comprising filler, supplementary cementitious material, water reducing polymers, latex, water retention agent, rheological agent, defoamer/antifoams, biocide, pigment, flame retardant, air-entraining agents and retarders like the following compounds:

• *Defoamer/Antifoams*

The possible defoamer is preferably chosen in the group comprising, more preferably consisting in: polyether polyols and mixes thereof.

• *Biocide*

The possible biocide is preferably chosen in the group comprising, more preferably consisting in: mineral oxides like zinc oxide and mixes thereof.

• *Pigment*

The possible pigment is preferably chosen in the group comprising, more preferably consisting in: $TiO_2$, iron oxide and mixes thereof.

• *Flame retardant*

Flame retardant (or flame proof agent) makes it possible to increase the fire resistance and/or to shrink the speed of flame spreading of the composition.

• *Air-entraining agents*

Air-entraining agents (surfactants) are advantageously chosen in the group comprising, more preferably consisting in, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting in the sulfonate olefins, the sodium lauryl sulfate and their mixes.

*• Retarders*

Retarders are advantageously chosen in the group comprising, more preferably consisting in tartric acid and its salts: sodium or potassium salts, citric acid and its salts: sodium (trisodic citrate) and their mixes.
In addition, other components may be:

- *Plasticizers*

- *Fibres*

- *Dispersion powders*

- *Wetting agents*

- *Polymeric resins*

- *Complexing agents*

- *Drying shrinkage reducing agents based on polyols.*

The total content of these optional other components in the dry mortar composition is preferably comprised between 0wt% and 5wt% by weight of the total weight of the binder composition, advantageously between 0.2wt% and 2wt%, and more advantageously between 0.5wt% and 1wt%.

*The wet mortar composition*

The invention also refers to a wet mortar composition, in particular tile adhesive, comprising at least one aggregate, the binder composition described above and water.
In a specific embodiment, in the wet mortar composition according to the invention the mass ratio water/hydraulic binder composition is between 0.30 and 0.63, advantageously between 0.34 and 0.48, and more advantageously between 0.38 and 0.42.

*The process for preparing wet mortar composition*

The invention also relates to a process for preparing the wet mortar composition described above comprising a step of mixing with water at least one aggregate and the hydraulic binder composition described above, the binder composition being prepared before the mixing step or in situ during the mixing step from at least some of the different components of the binder composition taken separately and/or under the form of premix(es).
In other words, wet mortar composition could be prepared by two distinct methods.
In a first method, the binder composition is prepared, and then mixed with the at least one aggregate. The dry mortar composition is thereafter mixed with water.
In a second method, the wet mortar composition is prepared by mixing in water each component of the binder composition and the aggregates.
According to the present disclosure, the term "mixing" has to be understood as any form of mixing.
In a preferred embodiment a part of the binder composition and at least a part of the water are mixed together prior to the mixing with the aggregate.

*Hardened industrial mortar composition*

The present invention also refers to hardened mortar composition obtained from the wet mortar composition described above.

**Examples**

Example 1: Tile adhesive compositions comprising the hydraulic binder according to the invention

A hydraulic binder composition is prepared by mixing GGBS, calcium sulfate, OPC, a CSA having a blaine of 5000 $\pm$ 250 cm$^2$/g and containing more than 55% of ye'elimite and less than 10% of belite, UP1560 which is a cellulose ether sold by Ashland®, and CMC the proportion are given in table 1 below, which takes totally 47.48% of dry mix.

Table 1

| Type of component | Component | Wt% |
|---|---|---|
| GGBS | GGBS and superfine GGBS | 86.4 |
| Calcium sulfate | Anhydrite | 8.2 |
| OPC | OPC | 0.4 |
| containing cements, ye'elimite containing clinker, and/or CAC | CSA | 4.2 |
| Complexing and thickening polymer | CMC | 0.4 |
| Rheological modifier | UP1560 | 0.4 |
| Water | | 40 |

This hydraulic binder composition is mixed with 2.5wt% of Vinnapas 7220, which is a latex sold by Wacker®, and 50.02 wt% of sand to obtain a dry tile adhesive composition according to the invention.

This dry tile adhesive composition is thereafter mixed with 19 wt% of water compared to the total weight of the dry tile adhesive composition to obtain a wet tile adhesive composition according to the invention.

The initial consistency of the wet tile adhesive composition according to the invention is 431 Pa*s. The adhesive strength of the hardened tile adhesive conforms to the standard EN12004 as C2TE type, as shown in Table 2 below which set forth the measurements of 3 samples of hardened tile adhesive composition are conducted at 24h, 7 days, 14 days and 28 days to study the strength evolution with a storage of (20 $\pm$ 2) °C and (50 $\pm$ 5) % relative humidity.

Table 2 Adhesive strength (unit on MPa equal to N/mm$^2$)

| | 24h | 7d | 14d | 28d | T$^{20min}$ | T$^{30min}$ | WATER | HEAT |
|---|---|---|---|---|---|---|---|---|
| Sample 1 | 0.21 | 1.08 | 1.36 | 1.20 | 1.21 | 1.20 | 1.25 | 1.26 |
| Sample 2 | 0.26 | 0.96 | 1.37 | 1.40 | 0.89 | 0.73 | 1.33 | 1.30 |
| Sample 3 | 0.25 | 1.02 | 1.31 | 1.50 | 0.91 | 0.79 | 1.26 | 1.45 |
| Average | 0.24 | 1.02 | 1.35 | 1.37 | 1.00 | 0.91 | 1.28 | 1.34 |

Open time T$^{20min}$ and T$^{30min}$ is defined as the "maximum interval after tile adhesive application, at which tiles can be embedded in the applied adhesive and meet the specified tensile adhesion strength requirement". To evaluate open time, after the preparation of test units, five tiles are placed after respectively 20 and 30 minutes since T$^{0min}$ on the fresh adhesive and loaded with masses of 20N for 30 s.

After 7 days of drying under dry conditions of (20 $\pm$ 2) °C and (50 $\pm$ 5) % relative humidity, test units are immersed in water at the standard temperature. After 20 days, tests units are removed from water and wiped with a cloth to bond the pull-head plates to the tiles. After a further 24h, necessary to the drying of the adhesive, the tests units are immersed in water. At 28 days, the tests units are removed from water and immediately pulled off with the tensile testing machine for WATER measurement.

After 14 days of drying under conditions of (20 $\pm$ 2) °C and (55 $\pm$ 5) % relative humidity, test units are placed in an air-circulating oven at (70 $\pm$ 3) °C for a further 14 days. Then, they are removed from the oven to bond the pull-head plates to the tiles and placed under standard conditions during still 24h, necessary to the drying of the adhesive. At 28 days, test units are pulled off with the tensile testing machine for HEAT measurement.

Example 2:

A hydraulic binder composition is prepared by mixing GGBS, calcium sulfate, OPC, a CSA having a blaine of

5000 ± 250 cm$^2$/g and containing more than 55% of ye'elimite and less than 10% of belite, UP1560 which is a cellulose ether sold by Ashland®, and GA the proportion are given in table 3 below:

Table 3

| Type of component | Component | Wt% |
|---|---|---|
| GGBS | GGBS and superfine GGBS | 86.4 |
| Calcium sulfate | Anhydrite | 8.2 |
| OPC | OPC | 0.4 |
| containing cements, ye'elimite containing clinker, and/or CAC | CSA | 4.2 |
| Complexing and thickening polymer | GA | 0.4 |
| Rheological modifier | UP1560 | 0.4 |
| Water | | 40 |

This hydraulic binder composition is mixed with 2.5wt% of Vinnapas 7220, which is a latex sold by Wacker®, and 50.02 wt% of sand to obtain a dry tile adhesive composition according to the invention.

This dry tile adhesive composition is thereafter mixed with 19 wt% of water compared to the total weight of the dry tile adhesive composition to obtain a wet tile adhesive composition according to the invention.

The initial consistency of the wet tile adhesive composition according to the invention is 367 Pa*s. The adhesive strength of the hardened tile adhesive conforms to the standard EN12004 as C2TE type, as shown in Table 4 below which set forth the measurements of 3 samples of hardened tile adhesive composition are conducted at 24h, 7 days, 14 days and 28 days to study the strength evolution with a storage of (20 ± 2) °C and (50 ± 5) % relative humidity.

Table 4 Adhesive strength (unit on MPa equal to N/mm$^2$)

| | 24h | 7d | 14d | 28d | T$^{20min}$ | T$^{30min}$ | WATER | HEAT |
|---|---|---|---|---|---|---|---|---|
| SSC2 (LMDC) | 0.24 | 0.73 | 1.08 | 1.07 | 0.87 | 0.83 | 1.18 | 1.21 |

**Claims**

1.  Hydraulic binder composition comprising:

    • Ground Granulated Blast Furnace Slag (GGBS),
    • More than 5wt% and, preferably at most 30wt% of calcium sulfate,
    • 5wt% or less of Ordinary Portland Cement (OPC),
    • 10wt% or less of ye'elimite containing cements, ye'elimite containing clinker, calcium aluminate cement (CAC), calcium aluminate clinker or mixtures thereof,
    • at least one complexing and thickening polymer, selected from the group consisting of Cellulose Methyl Carboxylate (CMC), Gum Arabic (GA), Guar, Guar ether, Agar, Carrageenan, Alginate, Xanthan Gum, Chitosan, Pectin, Hyaluronic Acid, Locust Bean Gum, superabsorbent polymer (SAP), preferably from the group consisting of CMC and GA, and
    • at least one rheological modifier like cellulose ether different from the complexing and thickening polymer.

2.  Hydraulic binder composition according to claim 1, wherein the complexing and thickening polymer is selected from the group consisting of CMC and GA.

3.  Hydraulic binder composition according to any one of the preceding claims, wherein the quantity of GGBS is between 55wt% and 95wt%, advantageously between 65wt% and 95wt%, and more advantageously between 75wt% and 95wt%.

4.  Hydraulic binder composition according to any one of the preceding claims, wherein the quantity of calcium sulfate is between 5% and 30%, advantageously between 5% and 25%, and more advantageously between 5% and 20%.

5.  Hydraulic binder composition according to any one of the preceding claims, wherein the quantity of OPC is less than 3wt%, more advantageously less than 2wt% and even more advantageously less than 1wt%.

6. Hydraulic binder composition according to claim 6, wherein the total quantity of ye'elimite containing cements, ye'elimite containing clinker and/or CAC is between 0wt% and 10wt%, advantageously between 0.5wt% and 5wt%, and more advantageously between 2.5wt% and 5wt%.

7. Hydraulic binder composition according to any one of the preceding claims, wherein the quantity of organic complexing and thickening agent is between 0wt% and 1.0wt%, advantageously between 0.1wt% and 0.5wt%, and more advantageously between 0.2wt% and 0.4wt%.

8. Hydraulic binder composition according to any one of the preceding claims, wherein the quantity of rheological modifier agent is between 0wt% and 1.0wt%, advantageously between 0.1wt% and 0.5wt%, and more advantageously between 0.2wt% and 0.4wt%.

9. Hydraulic binder composition according to any one of the preceding claims, wherein 1wt% and 50 wt% of the GGBS is superfine GGBS, advantageously between 5wt% and 35wt%, and more advantageously between 12wt% and 24wt%.

10. Dry mortar composition comprising at least one aggregate and the binder composition according to any one of claims 1 to 8.

11. Dry mortar composition according to claim 9, wherein it further comprises at least one additive selected from the group comprising filler, supplementary cementitious material, water reducing polymers, latex, water retention agent, rheological agent, defoamer/antifoams, biocide, pigment, flame retardant, air-entraining agents and retarders.

12. Wet mortar composition, preferably a tile adhesive composition, comprising at least one aggregate, the binder composition according to any one of claims 1 to 8 and water.

13. Wet mortar composition according to claim 11, wherein the mass ratio water/binder composition is between 0.30 and 0.63, advantageously between 0.34 and 0.48, and more advantageously between 0.38 and 0.42.

14. Hardened mortar obtained from the wet mortar composition according to any one of claims 11 and 12.

15. Process for preparing the wet mortar composition according to any one of claims 11 and 12 comprising a step of mixing with water, at least one aggregate and the hydraulic binder composition according to any one of claims 1 to 8, the binder composition being prepared before the mixing step or in situ during the mixing step from at least some of the different components of the binder composition taken separately and/or under the form of premix(es).

Europäisches
Patentamt

European
Patent Office

Office européen
des brevets

# EUROPEAN SEARCH REPORT

**Application Number**

EP 22 30 6129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 11 66 072 B (STEINE UND ERDEN G M B H) 19 March 1964 (1964-03-19) <br> * column 1, line 27 - line 28 * <br> * column 4, line 1 - line 68; example 2 * | 1-15 | INV. <br> C04B28/08 |
| A,D | US 2012/216721 A1 (HESSELBARTH FRANK [DE] ET AL) 30 August 2012 (2012-08-30) <br> * paragraph [0045] * <br> * claims 1-20 * | 1,15 | |
| A | WO 2017/198930 A1 (SAINT-GOBAIN WEBER [FR]) 23 November 2017 (2017-11-23) <br> * pages 9,11,12; examples 1-3 * | 1,15 | |
| A | US 2016/122246 A1 (KURYATNYK TETYANA [FR] ET AL) 5 May 2016 (2016-05-05) <br> * paragraph [0203] - paragraph [0209] * <br> * paragraph [0240]; example 1; table 1 * <br> * claims 1,13 * | 1,15 | |
| A | US 2022/162125 A1 (PERRINO LUIGI [IT] ET AL) 26 May 2022 (2022-05-26) <br> * paragraph [0290]; examples C1,C5; table 2 * | 1,15 | TECHNICAL FIELDS SEARCHED (IPC) <br><br> C04B |
| A | WO 2020/239576 A1 (SAINT GOBAIN WEBER [FR]) 3 December 2020 (2020-12-03) <br> * page 11; examples 1-5; table 2 * | 1,15 | |
| A | WO 2020/200890 A1 (SIKA TECH AG [CH]) 8 October 2020 (2020-10-08) <br> * paragraph [0290]; examples C1,C5; table 2 * | 1,15 | |
| A | US 2009/188409 A1 (SATO TAKAHIRO [JP]) 30 July 2009 (2009-07-30) <br> * paragraph [0039] - paragraph [0046] * | 1,15 | |

-/--

The present search report has been drawn up for all claims

| Place of search | Date of completion of the search | Examiner |
|---|---|---|
| The Hague | 3 January 2023 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 30 6129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/340065 A1 (DUPOUY LISSA [FR] ET AL) 4 November 2021 (2021-11-04) * paragraph [0115]; example M4; table 1 * ----- | 1,15 | |

TECHNICAL FIELDS
SEARCHED (IPC)

The present search report has been drawn up for all claims

| Place of search | Date of completion of the search | Examiner |
|---|---|---|
| The Hague | 3 January 2023 | Kolb, Ulrike |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 30 6129

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2023

| Patent document cited in search report | | Publication date | Patent family member(s) | | Publication date |
|---|---|---|---|---|---|
| DE 1166072 | B | 19-03-1964 | NONE | | |
| US 2012216721 | A1 | 30-08-2012 | AR | 079606 A1 | 08-02-2012 |
| | | | BR 112012010692 B1 | | 01-06-2021 |
| | | | CN | 102666423 A | 12-09-2012 |
| | | | DK | 2496533 T3 | 19-08-2019 |
| | | | EA | 201290287 A1 | 30-10-2012 |
| | | | EP | 2496533 A1 | 12-09-2012 |
| | | | EP | 3578532 A1 | 11-12-2019 |
| | | | ES | 2741587 T3 | 11-02-2020 |
| | | | FR | 2952050 A1 | 06-05-2011 |
| | | | HU | E045682 T2 | 28-01-2020 |
| | | | MY | 161585 A | 28-04-2017 |
| | | | PL | 2496533 T3 | 29-11-2019 |
| | | | PT | 2496533 T | 27-08-2019 |
| | | | TR | 201911164 T4 | 21-08-2019 |
| | | | UA | 107683 C2 | 10-02-2015 |
| | | | US | 2012216721 A1 | 30-08-2012 |
| | | | WO | 2011055063 A1 | 12-05-2011 |
| | | | ZA | 201202895 B | 27-12-2012 |
| WO 2017198930 | A1 | 23-11-2017 | BR 112018071455 A2 | | 05-02-2019 |
| | | | DK | 3458426 T3 | 15-08-2022 |
| | | | EP | 3458426 A1 | 27-03-2019 |
| | | | ES | 2925976 T3 | 20-10-2022 |
| | | | FR | 3051461 A1 | 24-11-2017 |
| | | | HU | E059291 T2 | 28-11-2022 |
| | | | PL | 3458426 T3 | 05-09-2022 |
| | | | PT | 3458426 T | 21-09-2022 |
| | | | RU | 2715583 C1 | 02-03-2020 |
| | | | SG 11201809746S A | | 28-12-2018 |
| | | | WO | 2017198930 A1 | 23-11-2017 |
| US 2016122246 | A1 | 05-05-2016 | BR 102015027886 A2 | | 04-10-2016 |
| | | | EP | 3015438 A1 | 04-05-2016 |
| | | | FR | 3027897 A1 | 06-05-2016 |
| | | | US | 2016122246 A1 | 05-05-2016 |
| US 2022162125 | A1 | 26-05-2022 | CN | 113454044 A | 28-09-2021 |
| | | | EP | 3959184 A1 | 02-03-2022 |
| | | | US | 2022162125 A1 | 26-05-2022 |
| | | | WO | 2020200890 A1 | 08-10-2020 |
| WO 2020239576 | A1 | 03-12-2020 | AR | 118973 A1 | 17-11-2021 |
| | | | CL | 2021002773 A1 | 08-07-2022 |
| | | | EP | 3976552 A1 | 06-04-2022 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 22 30 6129

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2023

| Patent document cited in search report | | Publication date | Patent family member(s) | | Publication date |
|---|---|---|---|---|---|
| | | | FR 3096365 A1 | | 27-11-2020 |
| | | | SG 11202112377T A | | 30-12-2021 |
| | | | WO 2020239576 A1 | | 03-12-2020 |
| WO 2020200890 A1 | | 08-10-2020 | CN 113454044 A | | 28-09-2021 |
| | | | EP 3959184 A1 | | 02-03-2022 |
| | | | US 2022162125 A1 | | 26-05-2022 |
| | | | WO 2020200890 A1 | | 08-10-2020 |
| US 2009188409 A1 | | 30-07-2009 | CA 2659051 A1 | | 06-12-2007 |
| | | | JP WO2007138648 A1 | | 01-10-2009 |
| | | | US 2009188409 A1 | | 30-07-2009 |
| | | | WO 2007138648 A1 | | 06-12-2007 |
| US 2021340065 A1 | | 04-11-2021 | AU 2019353948 A1 | | 04-03-2021 |
| | | | BR 112021004844 A2 | | 08-06-2021 |
| | | | CA 3111868 A1 | | 09-04-2020 |
| | | | CN 112739660 A | | 30-04-2021 |
| | | | CO 2021003972 A2 | | 19-04-2021 |
| | | | EP 3860964 A1 | | 11-08-2021 |
| | | | JP 2022502328 A | | 11-01-2022 |
| | | | KR 20210069037 A | | 10-06-2021 |
| | | | US 2021340065 A1 | | 04-11-2021 |
| | | | WO 2020070093 A1 | | 09-04-2020 |
| | | | ZA 202102774 B | | 31-08-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8932402 B2